# EUROPEAN PATENT SPECIFICATION

(11) **EP 0 751 071 B1**
(45) Date of publication and mention of the grant of the patent: **14.11.2001**
(21) Application number: 95201723.4
(22) Date of filing: 26.06.1995
(51) Int. Cl.: B65D 1/02, B29C 49/04, B29C 49/00

(54) **A container for liquid products**
Flüssigkeitsbehälter
Récipient pour liquides

(43) Date of publication of application: 02.01.1997
(73) Proprietor: THE PROCTER & GAMBLE COMPANY, Cincinnati, Ohio 45202 (US)
(72) Inventor: Bonifaci, Luigi, I-00196 Rome (IT); Loffredo, Arturo, I-00046 Grottaferrata (Rome) (IT)
(74) Representative: Bosotti, Luciano

(56) References cited:
- EP-A- 0 279 547
- EP-A- 0 302 705
- CH-A- 386 268
- DE-A- 1 432 147
- DE-A- 1 757 967
- GB-A- 2 015 914
- US-A- 3 881 621
- US-A- 4 421 804
- US-A- 4 667 818

## Description

### Field of the invention

The present invention relates to a container for containing liquids comprising at least a reinforcing means. Said reinforcing means is located on the side wall of said container, and improves the resistance to bulging of said side wall and the resistance to top load of said container.

### Background of the invention

The problem of package deformation is well known in the packaging industry. Said package deformation may be in response to pressure differences existing between the inside of an airtight package and the ambient pressure. Another possibility of package deformation may derive from a top load on said package. The top load on a package is created, for example, when other identical containers are stacked on said package. Such package deformation may be non-recoverable for certain package materials, like some plastics or metals. Thin-walled, partially flexible packages are particularly sensitive to the problem.

There are a number of possible factors which may lead to the existence of the pressure differences between the interior and the exterior of the package mentioned above. The content of the package may, for example, be chemically unstable or may be subject to reaction with gases which may exist in the head space of the package, or alternatively, in certain specific circumstances, may react with the package material itself. Any chemical reactions involving the liquid contents may lead to either production of gases, and hence to overpressure in the package, or to the absorption of any head space gases thereby causing underpressure in the package.

Pressure differences between the pressure inside the container and the ambient atmospheric pressure may also occur when the temperature during the filling and sealing of the container is significantly different from external temperature during shipment, transportation and storage. Another possibility of a pressure difference may be caused by a different ambient pressure at the filling of the container from another ambient pressure at a different geographical location, for example when hermetically sealed bottles are filled at the sea level and moved to a mountain area, or viceversa .

The pressure difference between the interior and the exterior of a container may result into a bulging of the container itself. For example, the pressure built-up inside a container can cause the base wall to bulge outwardly. This bulging of the base wall may make the container unstable when said container stands in its upright position and eventually make it fall. EP-A-534 012 and EP-A-572 722 describe containers made of thermoplastic material for containing liquids comprising a base wall exhibiting an improved resistance to bulging.

The containers of the prior art cited above are not able to prevent the bulging of their side walls. Furthermore, we found that the side walls of these containers are less resistant to inward deformation than to outward bulging. Hereinafter, the "inward deformation" is called "collapsing". The side walls collapse, for example, when the pressure inside an airtight container is lower than the pressure on the outside of said container. We found that the tensile strength of the side wall is not able to oppose a sufficient resistance to the collapsing of said side walls. On the contrary, the tensile strength of said side walls is sufficient to resist against the outward bulging of said side walls. Consequently, said collapsing side walls, as a result of underpressure inside said airtight container, may deform in such a manner to wrinkle said side walls. Eventually, said wrinkles may break into crackings, whereby the corresponding container may lose its leak tightness.

The same applies when said containers have to experience a top load. The resistance to top load is another important parameter of a container. As said before, a container standing in its upright position experiences a top load when, for example, other containers are stacked onto said container in pallets during storing and transportation. As for the collapsing, said side walls may deform to wrinkle said side walls when the amount of top load is over a certain maximum limit of resistance of said container. Eventually, said wrinkles may also break into crackings, whereby the corresponding container may lose its leak tightness. In the art, the resistance of the side walls to collapsing and to top load is usually solved by increasing the thickness and the weight of the containers. But this is inconvenient, since the cost of manufacturing of these containers is increased, as a consequence of a greater amount of material used for making said containers.

More specifically, the present invention relates to a container according to the preamble of claim 1, which is known, e.g. from DE-A-1 757 967, as well as to a method of manufacturing such a container. Somewhat similar arrangments are known, e.g. from CH-A- 386 268, DE-A-1 432 147 or GB-A-2 015 914.

It is therefore an object of the present invention to provide a container for liquid products comprising a side wall exhibiting an improved resistance to collapsing and top load without increasing the amount of material used to manufacture said container as well as a method of manufacturing such a container.

### Summary of the invention

The present invention, having the further features set forth in claim 1, is a container comprising a side wall and a base wall. Said side wall comprises at least one reinforcing rib. Said reinforcing rib is the thickest portion of said side wall in a cross sectional plane parallel to the vertical axis (A) of said side wall. Said reinforcing rib is located all around said side wall in a plane perpendicular to the vertical axis of said container. Said reinforcing rib extends over a limited portion of said side wall.

### Brief description of the Figures

Figure 1a is a cross sectional cut of a container along a plane parallel to the vertical axis of said container in an embodiment according to the present invention. Figures 1b is a cross sectional cut of the container of Figure 1a along line 5-5 in a plane perpendicular to the vertical axis of said container, whereas Figure 1c is another cross sectional cut of the container of Figure 1a along line 5a-5a in another plane perpendicular to the vertical axis of said container.

Figure 2 is a cross sectional view of a container also along a plane parallel to the vertical axis of said container in another embodiment according to the present invention.

Figure 3a is a front view of a container of the art having a uniform wall thickness distribution. Figure 3b is a front view of a container having the same shape of the container of Figure 3a, but comprising a wall thickness distribution defined according to the present invention.

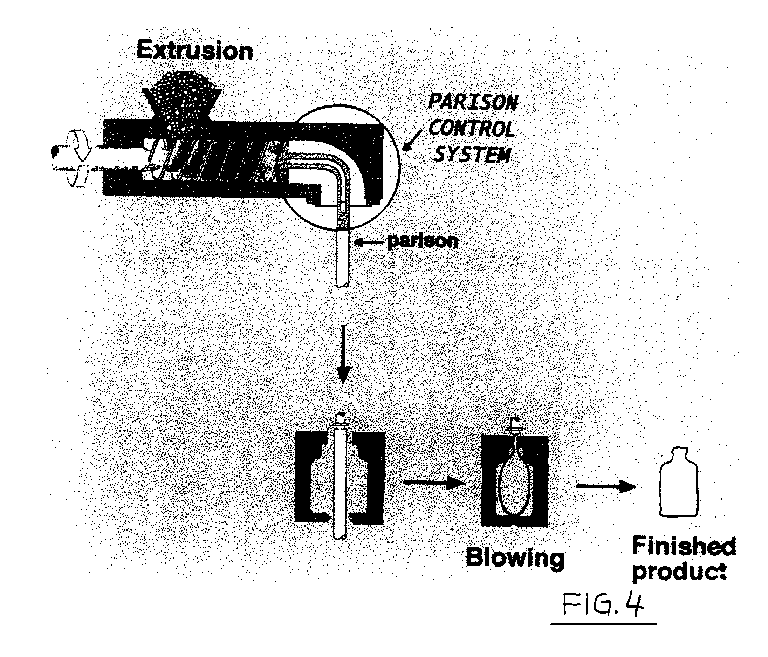

Figure 4 is a schematical illustration of the extrusion blow molding process which is able to produce the container according to the present invention.

### Detailed description of the invention

In the following, the "vertical axis of a container" is an axis perpendicular to the supporting plane of the container. Said supporting plane is the plane on which said container stands on its base wall (11) in its upright position. Furthermore, the "thickness of a wall" is hereinafter defined as being the minimum distance between the internal and external surface of a wall, said wall defining the boundary of a container.

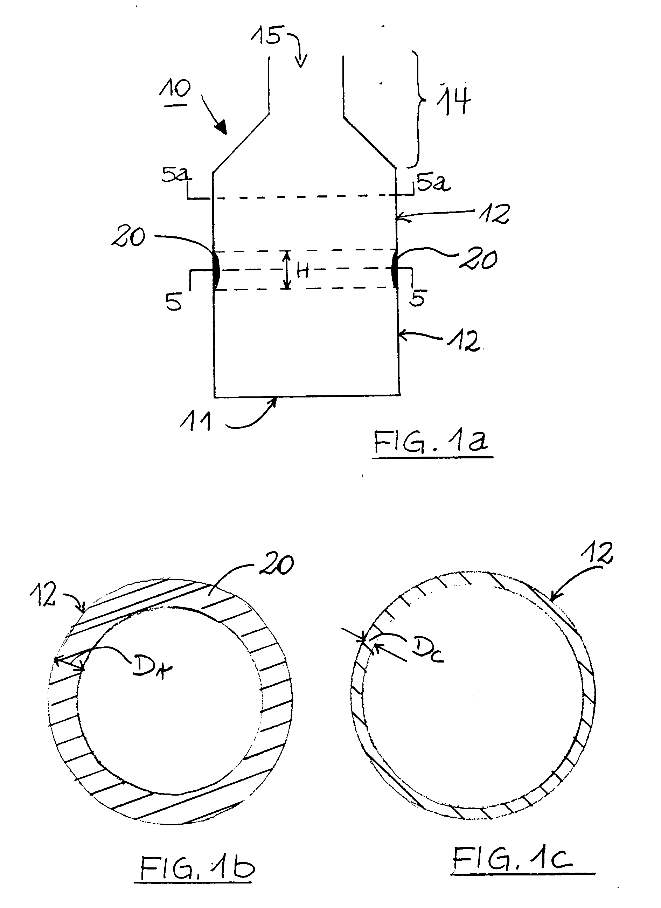

As depicted in Figure 1, the container (10) according to the present invention comprises a base wall (11) and a side wall (12). Preferably, said container (10) is made of thermoplastic material. Such thermoplastic materials have been extensively described in the art and include vinyl chloride based resins, polymers and co-polymers derived from olefins, acrylic polymers and co-polymers, polyethylene, polypropylene, polystyrene, polyethylene terephthalate, polyethylene terephthalate glycol, or mixtures thereof. Said container can be made of single or multi-layer extrusion of such materials. It can also comprise recycled thermoplastic materials. A preferred thermoplastic material used herein is polyethylene. The cross section of said container according to the present invention in a plane perpendicular to the container's vertical axis (Fig. 1, A) can be square or rectangular, ovoid or circular. In a preferred embodiment of the present invention said cross section is circular.

Said container (10) further comprises an upper portion or neck portion (14). Said upper or neck portion is located opposite to said base wall. Preferably, said upper or neck portion defines a dispensing opening (15). Preferably, said dispensing opening may engage a closure such that said container can be closed in an air and leak tight manner. Said container may further comprise a handle.

An essential feature of the present invention is a base wall (11). Said base wall is the part of said container (10) upon which said container stands in its upright position on a supporting plane (B). Said base wall is connected to said side wall (12). Preferably, said base wall exhibits an improved resistance against bulging. The bulging of said base wall may occur when the pressure inside said closed container is different from the outside pressure. Specifically, the pressure inside said closed container may be higher than the exterior pressure, consequently said base wall may bulge outwardly, or the pressure inside said closed container may be lower than the exterior pressure, in which case said base wall may deform inwardly or collapse. The base wall with an improved resistance to bulging described in EP-A-534 012 or EP-A-572 722, herein incorporated by reference, may be used as a base wall on said container according to the present invention.

Said side wall (12) is another essential feature of the present invention. Said side wall (12) is a wall located around said axis (A) of said container (10) and connected to said base wall (11). Said side wall and said base wall define a hollow body (15) of said container. Said hollow body is able to contain a liquid product in a leak tight manner. As discussed above, we found that the side walls of the container of the prior art are less resistant to the top load and to the inward deformation. Hereinafter, the "inward deformation" is called "collapsing". Furthermore, in the following the term "resistance" comprises the resistance to a top load and/or the resistance to collapsing. Non-resistant side walls may deform in such a manner to be irreversibly wrinkled, as a result of the stress of the collapsing or of the top load. Eventually, said wrinkles may break into crackings, whereby the corresponding container may lose its leak tightness.

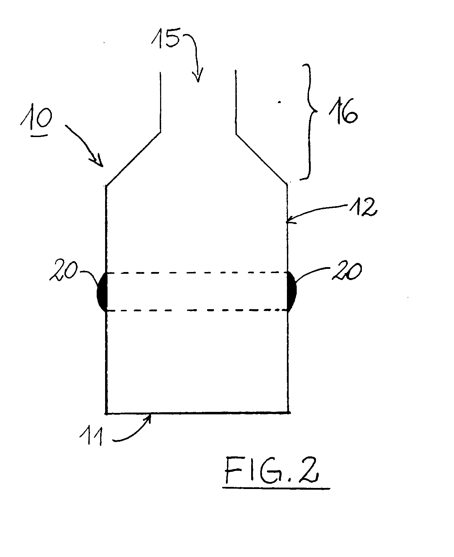

Therefore, the present invention comprises as another essential feature at least one reinforcing rib (20). Said reinforcing rib is the thickest portion of said side wall (12) in a cross sectional plane parallel to the vertical axis (A) of said side wall. Said reinforcing rib is located all around said side wall in a plane perpendicular to the vertical axis of said container. Said reinforcing rib extends over a limited portion (w) of the whole height (H) of said side wall. As can be seen from the cross sectional cut of Figures 1b and 1c, said reinforcing rib (20) increases the thickness of said side wall, i.e. the thickness (Dᵣ) of said container with said reinforcing rib is greater than the thickness (D_{c}) of said side wall right under and right above said reinforcing rib. In Figure 1a said reinforcing rib is part of the inner surface of said side wall (12). Said reinforcing rib (20) may also be part of the outer surface of said side wall, as illustrated in Figure 2.

We found that this reinforcing rib (20) strengthens said side wall (12). Indeed, we found that said side wall exhibits an improved resistance, reducing the deformation of said side wall. Furthermore, this strengthening of the whole of said side wall is achieved without increasing the thickness of said side wall in its totality, but only on a limited portion of said side wall. Consequently, the weight and the cost of said container can be controlled and limited without compromising on resistance. We further found that the weight, and therefore the cost, of said container comprising said reinforcing rib can be decreased at least compared to the containers of the prior art.

The resistance and the weight of said container can be optimized by determining certain parameters of said reinforcing rib (20). We found that the principal parameters of said reinforcing rib are the dimensions and the location of said reinforcing rib (20) on said side wall (12). The dimensions of said reinforcing rib is defined by the thickness (Fig. 1b, Dᵣ) and the width (Fig. 1a, H) of said reinforcing rib. The location of said reinforcing rib is the position of said reinforcing rib on said side wall. In the following, the location is defined by the height, whereby the height is measured starting from the supporting plane. We found a way to check an optimized set of parameters by using an analytical method. By "analytical method" it is meant a method which is able to calculate the physical characteristics of a container without actually manufacturing this container. In this manner it is possible to determine the best set of parameters for the reinforcing rib(s) on a container before making the container itself. We found that this analytical method can be performed by the so called "finite element analysis".

The "finite elements analysis", hereinafter called as FEA, is a method which is able to simulate an external stress and its effects onto the performance and resistance of a container. This method may take account of the form, the thickness distribution of the wall and the material used for said container. These parameters are sufficient to the FEA to characterize said container. The FEA is able to study the effects on said container when external stresses are exerted on it. Possible external stress forces made available by the FEA are the following:
a) a weight applied onto said container to simulate a top load;
b) forces which simulate the pressure differences between the inside and the outside of said container, i.e. it is possible to simulate collapsing and outward bulging of the walls of said container.

This FEA can be implemented as a computer program. This computer program is also able to represent in a diagram the effects happening on said container when a certain force with a certain strength is applied. For example, it is possible to analyze the effect on a side wall of a container when a top load is applied onto said container or when said side wall collapses due to underpressure.

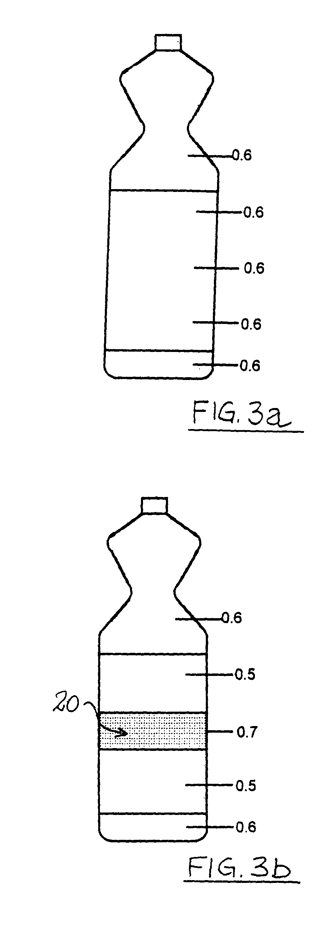

As an example, we take a reference container with an external shape as represented in Figure 3a made of a plastic material like high density polyethylene. This reference container has a uniform wall thickness all over the height of said container. In this case this uniform wall thickness is 0.6 mm, as shown in Figure 3a. The total weight of this reference container is 45 g (gram). When a force is applied which simulates underpressure inside said reference container, i.e. said force is such that said side wall tends to collapse, the FEA is able to calculate the maximum collapsing resistance. This "maximum collapsing resistance" is hereinafter defined as being the maximum underpressure at which said wall is resistant before observing an irreversible deformation of said wall due to the collapsing. The irreversible deformation may result in cracking in said wall. In the case of the reference container of Figure 3a, the FEA calculates a maximum collapsing resistance of about 226 mbar. A similar improvement can be obtained with containers of various shapes, including a straight cylindrical shape.

In Figure 3b, another container is illustrated. This container has the same external shape of the container of Figure 3a and is made of the same material, but further comprising a reinforcing rib (20). Said reinforcing rib introduces a non-uniform distribution of the wall thickness with respect to the other portions of said container, as schematically illustrated. Indeed, the portion of the reinforcing rib has a wall thickness of 0.7 mm, whereas the portions right under and right above said reinforcing rib have a wall thickness of 0.5 mm The remaining two portions, i.e. the upper portion and the portion of the base wall, have again the wall thickness of 0.6 mm. This wall thickness distribution allows to get a container with a total weight of 41 g, i.e. 4 g less than the reference container of Figure 3a.We found that the resistance of the container of Figure 3a can be improved although the total weight of said container has been reduced. Indeed, the container of Figure 3b with reduced weight comprising said reinforcing rib (20) located in the mid-height of said side wall has a maximum collapsing resistance of about 272 mbar. Therefore, in general a container of comprising a reinforcing rib is more resistant to collapsing with respect to a reference container without any reinforcing rib.

For the top load, we have further found that the maximum top load which can be applied onto the container with said reinforcing rib on Figure 3b before any occurance of irreversible deformation is relatively higher than for the container without any reinforcing ring of Figure 3a. Also these results have been confirmed by a practical experiment. Surprisingly, this improved resistance is achieved in spite of the reduced total weight of said container comprising said reinforcing rib. Therefore, it is possible to reduce the total weight and the cost of said container, and contemporarily increase the resistance of said container.

We have found that the resistance to top load can be further improved by having at least another reinforcing rib in the neck portion (14) of said container (10). More than two reinforcing ribs can be foreseen on said side wall (12). We found that the optimal number of reinforcing ribs depends from the external shape and the length of said side wall. The number of reinforcing ribs may also depend from the number of shoulders (Fig. 3b, 16) of said side wall. Preferably, every shoulder (16) may preferably comprise a reinforcing rib. The optimized number of reinforcing ribs and the positioning of these reinforcing ribs relative to each other can be also determined by the FEA. The width of said reinforcing rib depends on the dimensions of the bottle and its geometry. In the invention the width of the reinforcing rib is between 5 mm to 50 mm, more preferably between 10 mm to 40 mm for a 1.0 It bottle.

We have further found that the resistance of said container (10) may be further improved by reducing the gaseous head space of a filled container. The gaseous head space is the volume of gas remaining in said container after the filling and airtight closure of said container. Clearly, said gaseous head space is located in said neck portion (14) of said container between the top level of the contained liquid product and said dispensing opening (15). A smaller amount of gaseous head space means that a smaller amount of volume inside said filled container is compressible. Indeed, liquid products can be considered, on the contrary, as being incompressible. Consequently, the contained, incompressible liquid product strengthens said side wall (12) and said base wall (11) of said container improving the resistance to top load of said container. Furthermore, also the resistance to collapsing is improved. It is the gaseous head space which is compressible due to pressure differences between the interior and the exterior of said container. Similarly , the bulging effect visible on plastic bottles when the environmental temperature increases, is reduced. The volume of the mentioned gas contained in the head space increases with the increasing of the temperature.

Therefore, a smaller volume of gaseous head space available for collapsing results in a reduced amount deformation of said side wall. A reduced amount of collapsed or deformed side wall diminishes the probability to have crackings in said side wall. Preferably, the volume of said gaseous head space is less than 10% of the total containment volume of said container, more preferably said volume of said gaseous head space is less than 5%.

Said container (10) may be made by injection molding or extrusion blow molding. Specifically, the extrusion blow molding has to allow the control of the distribution of thicknesses of said base wall (11) and along said side wall (12) during the manufacturing of said container. Indeed, the extrusion blow molding process comprises the following three successive steps:
1.) extrusion of the plastic material of which said container is made;
2.) making of a parison having a certain wall thickness distribution, and whereby the wall thickness distribution of this parison is achieved by a parison control system;
3.) the parison is blow molded in a mold to form a container of the desired shape, whereby the wall thickness distribution has been defined in the parison control system.

The most delicate part of the extrusion blow molding process is the definition of the wall thickness distribution by the parison control system. Usually, said parison control system divides the height of said container in equidistant bands, called "parison bands". The wall thickness of the parison can be changed in each parison band. This means that the greater the number of parison bands are available during the definition of the wall thickness distribution by the parison control system, a greater resolution of the wall thickness distribution can be achieved.

An example of a commercially available parison control system, which is able to control the thickness of a parison in up to about 300 parison bands, is the "SmartBox" produced by Hunkar Laboratories Inc., 7007 Valley Avenue, Cincinnati, Ohio 45244 U.S.A. We found that the parison control system provided by "SmartBox" is suitable to get a certain wall thickness at a desired location of said wall. With this particular parison control system it is possible to locate a reinforcing rib at the desired location and with the desired dimensions, including its thickness, on a side wall of a container. Therefore, it is possible to manufacture container with complicated wall thickness distribution with the extrusion blow molding process.

Said container (10) may be filled with any liquid product. Preferably, said liquid product may be a detergent composition. Said detergent composition may be used for the cleaning of laundry, dish or hard surfaces. More preferably, said detergent composition comprises bleach, like hypochlorite or peroxygen bleach.

## Claims

1. A container (10) containing a liquid product, said container comprising a side wall (12), a base wall (11) and opposed to said base wall a neck portion (14), wherein said side wall comprises a reinforcing rib (20, 20'), said reinforcing rib being the thickest portion of said side wall in a cross sectional plane parallel to the vertical axis (A) of said side wall, said reinforcing rib being located all around said side wall in a plane perpendicular to the vertical axis of said container **characterized in that** said container (10) comprises after filling less than 10%, and preferably less than 5% volume of gaseous head space, and the width of said reinforcing rib is between 5 mm to 50 mm.

2. A container according to claim 1, **characterized in that** the width of said reinforcing rib is between 10 mm to 40 mm for a 1.0 lt bottle.

3. A container according to claim 1 or claim 2, **characterized in that** said reinforcing rib (20, 20') is part of the inner surface of said side wall (12).

4. A container according to any of the preceding claims **characterized in that** said reinforcing rib (20, 20') is located at mid-height of said side wall (12).

5. A container according to any of the preceding claims **characterized in that** said container comprises two reinforcing ribs.

6. A container according to any of the preceding claims **characterized in that** said container is filled with a liquid detergent.

7. A container according to claim 6 **characterized in that** said liquid detergent comprises a hypochlorite or peroxygen bleach.

8. A method of manufacture of a container (10) according to any of the preceding claims, **characterized in that** said method of manufacture is an extruded blow molding process and **in that** after manufacture, the container is filled with a liquid product such that it comprises less than 10% volume of gaseous headspace.

9. A method of manufacture according to claim 8 **characterized in that** said extruded blow molding comprises the following steps:
1.) extrusion of the plastic material of which said container is made;
2.) making of a parison having a certain wall thickness distribution, and whereby the wall thickness distribution of this parison is achieved by a parison control system;
3.) blow molding the parison in a mold to form a container of the desired shape, whereby the wall thickness distribution has been defined in the parison control system.

10. A method of manufacture according to claim 9 **characterized in that** said parison control system controls the thickness of said parison in up to about 300 parison bands.

## Patentansprüche

1. Behälter (10), enthaltend ein flüssiges Produkt, wobei der Behälter eine Seitenwand (12), eine Basiswand (11) und gegenüber der Basiswand einen Halsabschnitt (14) aufweist, wobei die Seitenwand eine Verstärkungsrippe (20, 20') aufweist, wobei die Verstärkungsrippe der dickste Abschnitt der Seitenwand in einer Querschnittsebene parallel zur Vertikalachse (A) der Seitenwand ist, wobei die Verstärkungsrippe um die ganze Seitenwand herum in einer Ebene senkrecht zur Vertikalachse des Behälters liegt, **dadurch gekennzeichnet, daß** der Behälter (10) nach dem Füllen weniger als 10%, bevorzugt weniger als 5%, Volumen an gasförmigem Kopfraum hat und die Breite der Verstärkungsrippe zwischen 5 mm und 50 mm liegt.

2. Behälter nach Anspruch 1, **dadurch gekennzeichnet, daß** die Breite der Verstärkungsrippe für eine 1-Liter-Flasche zwischen 10 mm und 40 mm liegt.

3. Behälter nach Anspruch 1 oder Anspruch 2, **dadurch gekennzeichnet, daß** die Verstärkungsrippe (20, 20') Teil der Innenoberfläche der Seitenwand (12) ist.

4. Behälter nach einem der vorhergehenden Ansprüche, **dadurch gekennzeichnet, daß** die Verstärkungsrippe (20, 20') auf mittlerer Höhe der Seitenwand (12) liegt.

5. Behälter nach einem der vorhergehenden Ansprüche, **dadurch gekennzeichnet, daß** der Behälter zwei Verstärkungsrippen aufweist.

6. Behälter nach einem der vorhergehenden Ansprüche, **dadurch gekennzeichnet, daß** der Behälter mit einem flüssigen Waschmittel gefüllt ist.

7. Behälter nach Anspruch 6, **dadurch gekennzeichnet, daß** die Flüssigkeit ein Hypochlorit- oder Persauerstoff-Bleichmittel ist.

8. Verfahren zur Herstellung eines Behälters (10) nach einem der vorhergehenden Ansprüche, **dadurch gekennzeichnet, daß** das Verfahren zur Herstellung ein Extrusionsblasformverfahren ist und daß nach der Herstellung der Behälter mit einem flüssigen Produkt so gefüllt wird, daß er weniger als 10% Volumen an gasförmigem Kopfraum besitzt.

9. Verfahren zur Herstellung nach Anspruch 8, **dadurch gekennzeichnet, daß** das Extrusionsblasformen die folgenden Schritte umfaßt:
1.) Extrusion des Kunststoffmateriales, aus dem der Behälter gefertigt wird;
2.) Herstellen eines Vorformlings mit einer bestimmten Wanddickenverteilung, wobei die Wanddickenverteilung des Vorformlings durch ein Vorformlingsteuerungssystem erzielt wird;
3.) Blasformen des Vorformlings in einer Form, um einen Behälter der gewünschten Form zu bilden, wobei die Wanddickenverteilung in dem Vorformlingsteuerungssystem definiert worden ist.

10. Verfahren zur Herstellung nach Anspruch 9, **dadurch gekennzeichnet, daß** das Vorformlingsteuerungssystem die Dicke des Vorformlings in bis zu etwa 300 Vorformlingsbändern steuert.

## Revendications

1. Récipient (10) contenant un produit liquide, ledit récipient comportant une paroi latérale (12), une paroi de base (11) et une partie de goulot (14) opposée à ladite paroi de base, ladite paroi latérale comportant une nervure de renfort (20, 20'), ladite nervure de renfort étant la partie la plus épaisse de ladite paroi latérale dans un plan de coupe parallèle à l'axe vertical (A) de ladite paroi latérale, ladite nervure de renfort étant disposée tout autour de ladite paroi latérale dans un plan perpendiculaire à l'axe verticale dudit récipient, **caractérisé en ce que** ledit récipient (10) comporte, après remplissage, moins de 10 %, et de préférence moins de 5 %, de volume d'espace libre gazeux, et la largeur de ladite nervure de renfort est entre 5 mm et 50 mm.

2. Récipient selon la revendication 1, **caractérisé en ce que** la largeur de ladite nervure de renfort est entre 10 mm et 40 mm pour une bouteille de 1 litre.

3. Récipient selon la revendication 1 ou la revendication 2, **caractérisé en ce que** ladite nervure de renfort (20, 20') est une partie de la surface interne de ladite paroi latérale (12).

4. Récipient selon l'une quelconque des revendications précédentes, **caractérisé en ce que** ladite nervure de renfort (20, 20') est disposée à mi-hauteur de ladite paroi latérale (12).

5. Récipient selon l'une quelconque des revendications précédentes, **caractérisé en ce que** ledit récipient comporte deux nervures de renfort.

6. Récipient selon l'une quelconque des revendications précédentes, **caractérisé en ce que** ledit récipient est rempli avec un détergent liquide.

7. Récipient selon la revendication 6, **caractérisé en ce que** ledit détergent liquide comporte de l'hypochlorite ou un agent de blanchiment peroxy.

8. Procédé de fabrication d'un récipient (10) selon l'une quelconque des revendications précédentes, **caractérisé en ce que** ledit procédé de fabrication est un processus de moulage par extrusion et soufflage, et **en ce que**, après fabrication, le récipient est rempli avec un produit liquide de telle sorte qu'il comporte moins de 10 % de volume d'espace libre gazeux.

9. Procédé de fabrication selon la revendication 8, **caractérisé en ce que** ledit moulage par extrusion et soufflage comporte les étapes suivantes :
1) extrusion de la matière plastique dans laquelle est fabriqué ledit récipient ;
2) fabrication d'une paraispn ayant une certaine répartition d'épaisseur de paroi, et de sorte que la répartition d'épaisseur de paroi de cette paraison est obtenue par un système de commande de paraison ;
3) moulage par soufflage de la paraison dans un moule afin de former un récipient de la forme souhaitée, de sorte que la répartition d'épaisseur de paroi a été définie dans le système de commande de paraison.

10. Procédé de fabrication selon la revendication 9, **caractérisé en ce que** ledit système de commande de paraison commande l'épaisseur de ladite paraison jusqu'à environ 300 bandes de paraison.
